# FASCICULE DE BREVET EUROPEEN

(11) **EP 4 495 458 B1**
(45) Date de publication et mention de la délivrance du brevet: **06.08.2025**
(21) Numéro de dépôt: 24174192.5
(22) Date de dépôt: 03.05.2024
(51) Int. Cl.: F16H 25/22, F16H 25/24

(54) **COMPOSANT DE MÉCANISME DE VIS À BILLES ET MÉCANISME INCORPORTANT UN TEL COMPOSANT**
KUGELGEWINDESPINDELMECHANISMUSKOMPONENTE UND MECHANISMUS ZUR BEFESTIGUNG SOLCH EINER KOMPONENTE
BALL SCREW MECHANISM COMPONENT AND MECHANISM INCORPORATING SUCH A COMPONENT

(30) Priorité: 18.07.2023 FR 2307660
(43) Date de publication de la demande: 22.01.2025
(73) Titulaire: NTN Europe, 74000 Annecy (FR)
(72) Inventeur: THOLLIN, Nicolas, 74010 ANNECY Cedex (FR)
(74) Mandataire: Alatis

(56) Documents cités:
- EP-A2- 1 281 880
- WO-A2-2009/100332
- JP-A- 2017 106 583

## Description

### DOMAINE TECHNIQUE DE L'INVENTION

L'invention se rapporte à un mécanisme de vis à billes, et à un composant pour un tel mécanisme, qui peut être selon le cas un écrou ou une vis.

### ETAT DE LA TECHNIQUE ANTERIEURE

Dans le document JP2017106583 A2 est décrit un mécanisme de vis à billes et comportant une vis, un écrou et des billes. La vis forme un chemin de roulement hélicoïdal de pas constant P autour d'un axe de référence du mécanisme de vis à billes. L'écrou forme également un chemin de roulement hélicoïdal de pas constant égal à P autour de l'axe de référence, ce chemin de roulement comportant au moins une section médiane de plusieurs spires successives, une première section de recirculation à une première extrémité axiale de la section médiane, et une deuxième section de recirculation à une deuxième extrémité axiale de la section médiane. L'écrou forme en outre un canal de recirculation reliant la première et la deuxième section de recirculation et débouchant par une embouchure dans chacune des première et deuxième sections de recirculation. Les billes sont positionnées pour circuler en circuit fermé entre le chemin de roulement hélicoïdal de l'écrou et le chemin de roulement hélicoïdal de la vis et dans le canal de recirculation. Des recirculateurs sont disposés aux embouchures du canal de recirculation, pour guider le cheminement des billes entre les chemins de roulement hélicoïdaux et le canal de recirculation.

On constate avec ce type de vis à billes des écaillages des billes, que l'on attribue au contact entre les billes et des arêtes vives formées aux embouchures du canal de recirculation, ceci malgré les recirculateurs. Cet écaillage diminue fortement la durée de vie de la vis à billes.

### EXPOSE DE L'INVENTION

L'invention vise à remédier aux inconvénients de l'état de la technique et à proposer des moyens permettant d'augmenter la durée de vie d'un mécanisme de vis à billes.

Pour ce faire est proposé, selon un premier aspect de l'invention, un composant de mécanisme de vis à billes, formant un chemin de roulement hélicoïdal autour d'un axe de référence pour guider des billes, le chemin de roulement hélicoïdal du composant présentant un fond de chemin, un premier flanc et un deuxième flanc se faisant face de part et d'autre du fond de chemin, le chemin de roulement hélicoïdal du composant comportant au moins une section médiane de une ou plusieurs spires successives formant une hélice de pas constant égal à P, une première section de recirculation à une première extrémité axiale de la section médiane, et une deuxième section de recirculation à une deuxième extrémité axiale de la section médiane, un premier flanc théorique imaginaire étant défini par une prolongation géométrique imaginaire du premier flanc du chemin de roulement hélicoïdal du composant, au pas constant P, depuis la section médiane au-delà de la première extrémité axiale et/ou de la deuxième extrémité axiale. Le composant est tel que :
- au niveau de la première section de recirculation, le premier flanc du chemin de roulement hélicoïdal du composant est tourné axialement vers la section médiane, et présente un décalage axial D11 par rapport au premier flanc théorique imaginaire, le premier flanc du chemin de roulement hélicoïdal du composant étant plus éloigné de la section médiane que le premier flanc théorique imaginaire ; et/ou
- au niveau de la deuxième section de recirculation, le premier flanc du chemin de roulement hélicoïdal du composant est tourné axialement à l'opposé de la section médiane, et présente un décalage axial D21, par rapport au premier flanc théorique imaginaire, le premier flanc du chemin de roulement hélicoïdal du composant étant moins éloigné de la section médiane que le premier flanc théorique imaginaire.

Le décalage axial permet de réduire les efforts appliqués sur des billes roulant sur le chemin de roulement hélicoïdal et de générer un jeu dans la première et/ou la second section de recirculation, pour faciliter la recirculation des billes.

Suivant un mode de réalisation, un canal de recirculation relie la première et la deuxième sections de recirculation et débouche par une embouchure dans chacune des première et deuxième sections de recirculation . Les embouchures peuvent être alignés dans un même plan contenant l'axe de référence. C'est notamment au niveau de l'embouchure du canal de recirculation que le décalage axial permet aux billes de ne plus être en charge. Les décalages axiaux nécessaires pour éviter un contact entre les billes et les rebords des embouchures du canal de recirculation sont faibles. En pratique, on peut par exemple prévoir que le décalage axial D11, mesuré dans un plan axial tangentiel à l'embouchure du canal de recirculation débouchant dans la première section de recirculation, soit supérieur à 1µm en valeur absolue et/ou inférieur à 25µm en valeur absolue.

Suivant un mode de réalisation, le décalage axial D11 augmente continument en valeur absolue, depuis une valeur nulle à la première extrémité de la section médiane, jusqu'à une valeur maximale, sur un secteur angulaire autour de l'axe de référence.

Suivant un mode de réalisation, le décalage axial D21 augmente continument en valeur absolue, depuis une valeur nulle à la deuxième extrémité de la section médiane, jusqu'à une valeur maximale, sur un secteur angulaire autour de l'axe de référence.

De préférence, la valeur maximale du décalage axial D11 est atteinte dans un plan axial tangentiel ou sécant avec l'embouchure du canal de recirculation débouchant dans la première section de recirculation.

De préférence, la valeur maximale du décalage axial D21 est atteinte dans un plan axial tangentiel ou sécant avec l'embouchure du canal de recirculation débouchant dans la deuxième section de recirculation.

La réduction des efforts, ou leur augmentation, suivant le sens de rotation, est ainsi progressive le long de la trajectoire des billes.

Suivant un mode de réalisation, la première section de recirculation s'étend sur un secteur angulaire supérieur à 10° et inférieur à 360°, de préférence supérieur à 30°, de préférence inférieur à 180°, de préférence inférieur à 90°.

Suivant un mode de réalisation, la deuxième section de recirculation s'étend sur un secteur angulaire supérieur à 10° et inférieur à 360°, de préférence supérieur à 30°, de préférence inférieur à 180°, de préférence inférieur à 90°.

On concilie ainsi deux objectifs, l'un étant de maximiser la partie utile que constitue la section médiane pour la charge transmise entre la vis et l'écrou, l'autre étant d'assurer un bon guidage des billes dans les portions de transitions constituées par les sections de recirculation de l'écrou.

Le décalage D11 et le décalage D21 sont utiles lorsque la composante axiale des efforts exercés par le composant sur les billes est située dans un sens, et peut suffire dans des applications où les efforts sont unidirectionnels.

Dans l'hypothèse où le composant est susceptible de se voir appliquer des efforts dont la composante axiale est bidirectionnelle, on prévoit avantageusement un deuxième flanc théorique imaginaire est défini par une prolongation géométrique imaginaire du deuxième flanc du chemin de roulement hélicoïdal du composant, au pas constant P, depuis la section médiane au-delà de la première extrémité et de la deuxième extrémité axiales. Suivant un mode de réalisation, le deuxième flanc du chemin de roulement hélicoïdal du composant présente, au niveau de la première section de recirculation, un décalage axial D12 par rapport au deuxième flanc théorique imaginaire, le décalage axial D12, mesuré en valeur absolue dans tout plan axial, étant inférieur ou égal au décalage axial D11, le deuxième flanc du chemin de roulement hélicoïdal du composant en étant plus éloigné de la section médiane que le deuxième flanc théorique imaginaire. De préférence, le décalage axial D12 est égal, en valeur absolue, au décalage axial D11 .

Alternativement, on peut prévoir qu'au niveau de la première section de recirculation, le deuxième flanc du chemin de roulement hélicoïdal du composant soit confondu avec le deuxième flanc théorique imaginaire.

Suivant un mode de réalisation, le deuxième flanc du chemin de roulement hélicoïdal du composant présente, au niveau de la deuxième section de recirculation, un décalage axial D22 par rapport au deuxième flanc théorique imaginaire, le décalage axial D22, mesuré en valeur absolue dans tout plan axial, étant inférieur ou égal au décalage axial D21, le deuxième flanc du chemin de roulement hélicoïdal du composant en étant plus proche de la section médiane que le deuxième flanc théorique imaginaire. De préférence, le décalage axial D22 est égal, en valeur absolue, au décalage axial D21.

Alternativement, on peut prévoit qu'au niveau de la deuxième section de recirculation, le deuxième flanc du chemin de roulement hélicoïdal du composant soit confondu avec le deuxième flanc théorique imaginaire.

Suivant un autre aspect de l'invention, celle-ci a trait à un mécanisme selon la revendication 10.

Suivant un mode de réalisation, le chemin de roulement hélicoïdal du deuxième composant présente un fond de chemin, un premier flanc et un deuxième flanc se faisant face de part et d'autre du fond de chemin, le premier flanc du chemin de roulement hélicoïdal du deuxième composant étant tourné dans un même premier sens axial que le premier flanc du chemin de roulement hélicoïdal du premier composant, le deuxième flanc du chemin de roulement hélicoïdal du deuxième composant étant tourné dans un même deuxième sens axial que le deuxième flanc du chemin de roulement hélicoïdal du premier composant, caractérisé en ce qu'au niveau de la section médiane, lorsque les billes sont simultanément en contact avec le premier flanc et le deuxième flanc du chemin de roulement hélicoïdal du deuxième composant et avec le premier flanc du chemin de roulement du premier composant, il existe un jeux constructif axial J entre les billes et le deuxième flanc du chemin de roulement hélicoïdal du premier composant.

Il est avantageux de prendre en compte ce jeu constructif dans le dimensionnement du ou des décalages. De préférence, le décalage D11 est inférieur au jeux constructif axial J. De préférence, le décalage D21 est inférieur au jeux constructif axial J. De préférence, le jeux constructif axial J, mesuré parallèlement à la direction axiale, est supérieur à 1µm. De préférence, le jeux constructif axial J, mesuré parallèlement à la direction axiale, est inférieur à 25µm.

### BREVE DESCRIPTION DES FIGURES

D'autres caractéristiques et avantages de l'invention ressortiront à la lecture de la description qui suit, en référence aux figures annexées qui illustrent :
- [Fig. 1] la figure 1, un mécanisme de vis à billes, en perspective et en coupe axiale, illustrant notamment des billes circulant sur des chemins de roulement et/ou de recirculation d'un écrou et d'une vis du mécanisme de vis à billes ;
- [Fig. 2] la figure 2, une coupe axiale du mécanisme de vis à billes de la figure 1 ;

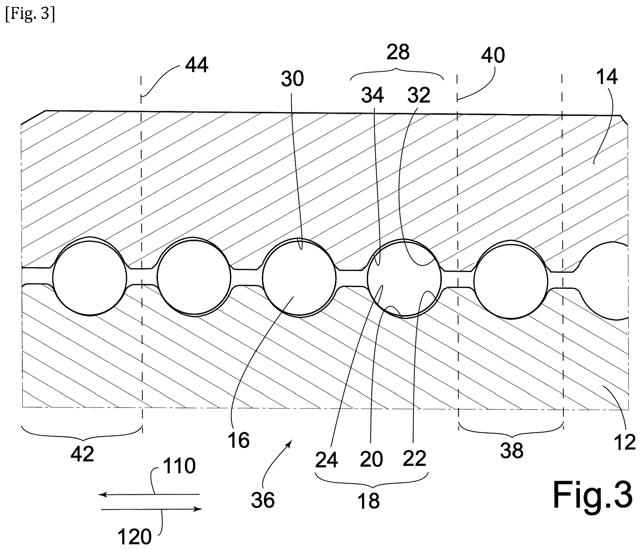

- [Fig. 3] la figure 3, une vue schématique du positionnement des billes circulants sur les chemins de roulements du mécanisme de vis à billes
- [Fig. 4] la figure 4, une vue de détail d'une première section d'extrémité du chemin de roulement de l'écrou, suivant un premier mode de réalisation de l'invention ;
- [Fig. 5] la figure 5, une vue de détail d'une deuxième section d'extrémité du chemin de roulement de l'écrou, suivant le premier mode de réalisation de l'invention ;
- [Fig. 6] la figure 6, une vue de détail d'une première section d'extrémité du chemin de roulement de l'écrou, suivant un deuxième mode de réalisation de l'invention ;
- [Fig. 7] la figure 7, une vue de détail d'une deuxième section d'extrémité du chemin de roulement de l'écrou, suivant le deuxième mode de réalisation de l'invention ;
- [Fig. 8] la figure 8, une vue de détail d'une première section d'extrémité du chemin de roulement de l'écrou, suivant un troisième mode de réalisation de l'invention ;
- [Fig. 9] la figure 9, une vue de détail d'une deuxième section d'extrémité du chemin de roulement de l'écrou, suivant le troisième mode de réalisation de l'invention ;
- [Fig. 10] la figure 10, une vue schématique du mécanisme de vis à billes en coupe transversale, illustrant un jeu constitué entre les billes et les chemins de roulement ;
- [Fig. 11] la figure 11, une autre vue schématique du mécanisme de vis à billes en coupe transversale, illustrant le jeu constitué entre les billes et les chemins de roulement.

Pour plus de clarté, les éléments identiques ou similaires sont repérés par des signes de référence identiques sur l'ensemble des figures.

### DESCRIPTION DÉTAILLÉE DE MODES DE REALISATION

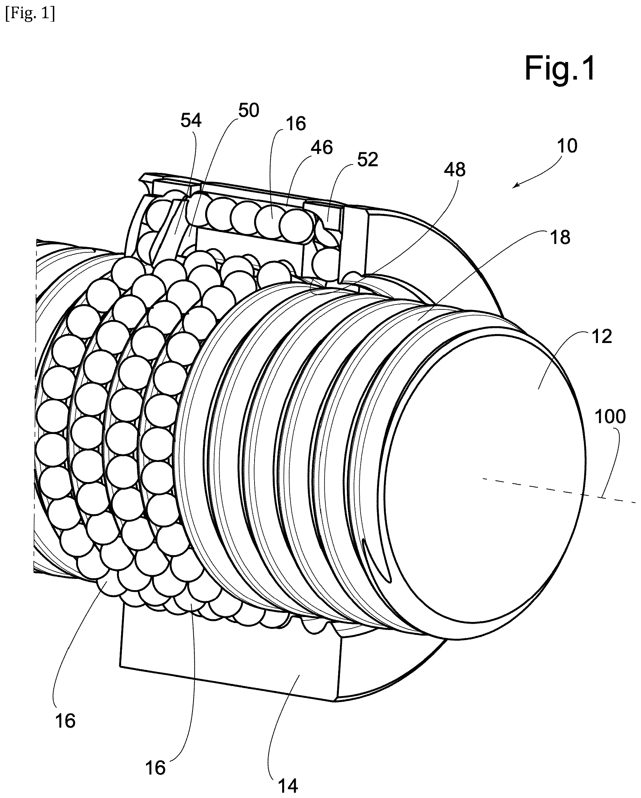

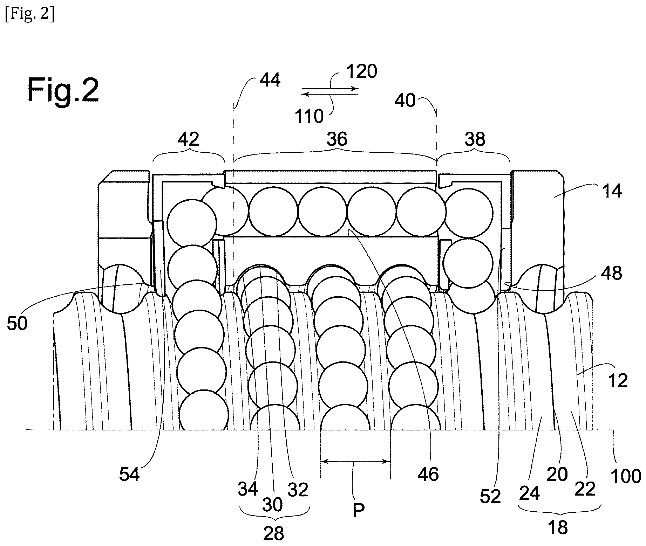

Sur les figures **1** **et** **2** est illustré un mécanisme de vis à billes **10** comportant deux composants filetés, à savoir une vis **12** et un écrou **14,** et des billes **16.**

La vis **12** est métallique, par exemple en acier, et forme un chemin de roulement hélicoïdal **18** autour d'un axe de référence **100** du mécanisme de vis à billes **10,** tourné radialement à l'opposé de l'axe de référence **100.** Ce chemin de roulement hélicoïdal **18** présente une enveloppe hélicoïdale de pas constant P autour de l'axe de référence **100,** avec un fond de chemin **20,** ainsi qu'un premier flanc **22** et un deuxième flanc **24** se faisant face de part et d'autre du fond de chemin **20,** le premier flanc **22** étant tourné dans un premier sens axial **110** de l'axe de référence **100,** le deuxième flanc **24** étant tourné dans un deuxième sens axial **120** de l'axe de référence **100.** Les flancs **22, 24** du chemin de roulement hélicoïdal **18** de la vis **12** ont de préférence une section concave, par exemple en arc de cercle, dans un plan perpendiculaire à la génératrice du chemin de roulement hélicoïdal **18,** et peuvent former une ogive s'étendant de part et d'autre du fond de chemin **20,** ou un arc de cercle continu.

L'écrou **14** est métallique, par exemple en acier, et forme un chemin de roulement **28** hélicoïdal autour de l'axe de référence **100,** tourné vers l'axe de référence **100,** et qui présente un fond de chemin **30,** ainsi qu'un premier flanc **32** et un deuxième flanc **34** se faisant face de part et d'autre du fond de chemin **30,** le premier flanc **32** étant tourné dans le premier sens axial **110** de l'axe de référence **100,** le deuxième flanc **34** étant tourné dans le deuxième sens axial **120** de l'axe de référence **100.** Le fond de chemin **30** du chemin de roulement **28** hélicoïdal de l'écrou **14** est à une distance constante de l'axe de référence **100.**

Le chemin de roulement **28** hélicoïdal de l'écrou **14** comporte une section médiane **36** de plusieurs spires successives formant une hélice de pas constant égal à P, une première section de recirculation **38** à une première extrémité **40** axiale de la section médiane **36,** et une deuxième section de recirculation **42** à une deuxième extrémité **44** axiale de la section médiane **36.** Dans la section médiane **36** au moins, les flancs **32, 34** du chemin de roulement **28** hélicoïdal de l'écrou **14** ont de préférence une section concave, par exemple en arc de cercle, dans un plan perpendiculaire à la génératrice du chemin de roulement hélicoïdal **28,** et peuvent former une ogive s'étendant de part et d'autre du fond de chemin **30.**

L'écrou **14** forme en outre un canal de recirculation **46** qui relie la première section de recirculation **38** à la deuxième section de recirculation **42** et débouche par une embouchure **48, 50** dans chacune des première et deuxième sections de recirculation **38, 42.** Le rebord de chaque embouchure **48, 50** forme le cas échéant une arête vive. Au niveau des embouchures **48, 50** sont disposés des recirculateurs **52, 54,** qui sont de préférence des pièces rapportées, le cas échéant en matériau plastique ou métallique, et qui permettent de guider les billes **16** lors du changement de direction à l'entrée ou à la sortie du canal de recirculation **46.**

Les billes **16** peuvent être par exemple réalisées en acier ou en céramique, et sont dimensionnées et positionnées pour circuler en circuit fermé entre le chemin de roulement **28** hélicoïdal de l'écrou **14** et le chemin de roulement hélicoïdal de la vis **12,** ainsi que dans le canal de recirculation **46,** de préférence sans séparateurs entre les billes **16.**

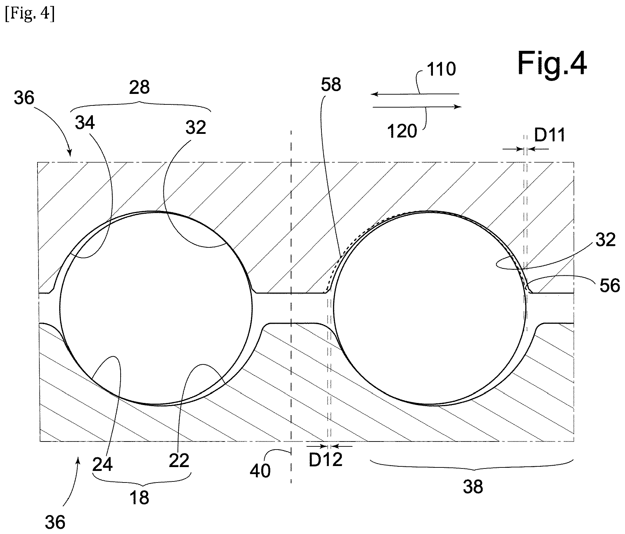

Les chemins de roulement et les billes **16** sont de préférence dimensionnés de sorte qu'au niveau de la section médiane **36,** lorsque les billes **16** sont simultanément en contact avec le deuxième flancs **24** du chemin de roulement hélicoïdal de la vis **12** et avec le premier flanc **32** du chemin de roulement **28** de l'écrou **14,** il existe un jeux constructif axial J entre les billes **16** et le deuxième flanc **34** du chemin de roulement **28** hélicoïdal de l'écrou **14.** Ce jeu constructif axial J, mesuré parallèlement à la direction axiale, est de préférence supérieur à 1µm et inférieur à 25µm, et a été illustré de façon schématique et exagérée sur la figure 4.

Pour décrire le chemin de roulement **28** hélicoïdal de l'écrou **14** au niveau des sections de circulation, on peut définir géométriquement un premier flanc théorique imaginaire **56** (en traits interrompus sur les figures 4 à 9) comme une prolongation géométrique imaginaire du premier flanc **32** du chemin de roulement **28** hélicoïdal de l'écrou **14,** au pas constant P, depuis la section médiane **36** au-delà de la première extrémité **40** et de la deuxième extrémité **44.** De façon analogue, on peut définir géométriquement un deuxième flanc théorique imaginaire **58** (en traits interrompus sur les figures 4 à 9) qui est une prolongation géométrique imaginaire du deuxième flanc **34** du chemin de roulement **28** hélicoïdal de l'écrou **14,** au pas constant P, depuis la section médiane **36** au-delà de la première extrémité **40** et de la deuxième extrémité **44** axiales.

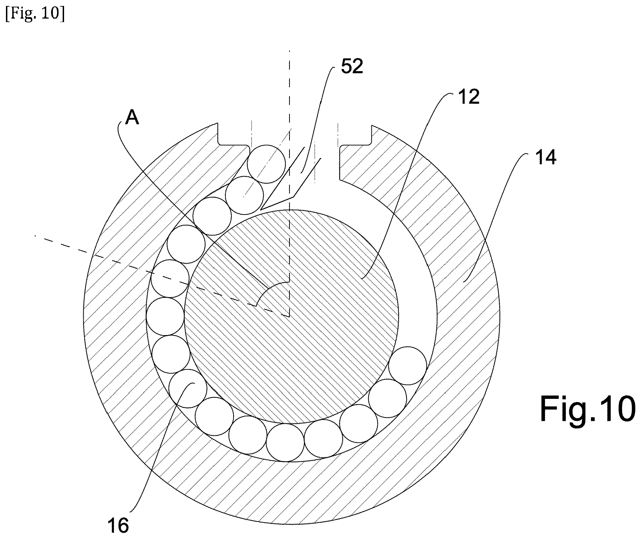

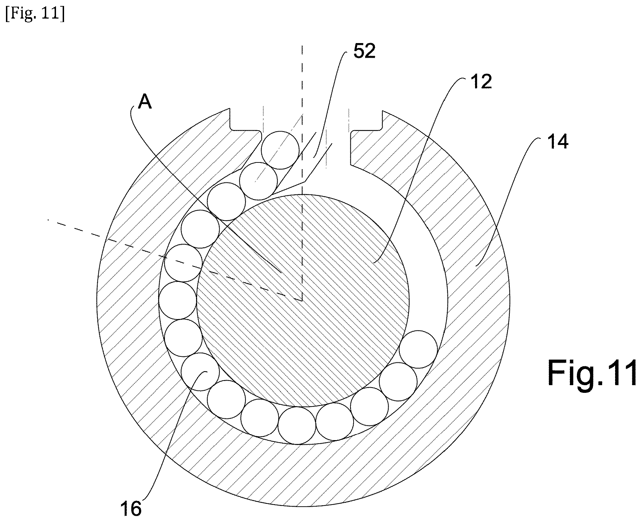

Au niveau de la première section de recirculation **38,** et comme illustré sur la figure 4, le premier flanc **32** du chemin de roulement **28** hélicoïdal de l'écrou **14** est tourné axialement vers la section médiane **36,** dans le premier sens **110,** et présente un décalage axial **D11** par rapport au premier flanc théorique imaginaire **56,** le premier flanc **32** du chemin de roulement **28** hélicoïdal de l'écrou **14** étant plus éloigné de la section médiane **36** que le premier flanc théorique imaginaire **56.** La première section de recirculation **38** s'étend sur un secteur angulaire A, illustré sur les figures **10** et **11****,** supérieur à 10° et inférieur à 360°, de préférence supérieur à 30°, de préférence inférieur à 180°, de préférence inférieur à 90°. De préférence, le décalage axial **D11** augmente continument en valeur absolue, et de préférence avec une dérive continue, depuis une valeur nulle à la première extrémité **40** de la section médiane **36,** jusqu'à une valeur maximale, sur un secteur angulaire autour de l'axe de référence **100.** Le décalage axial **D11** atteint une valeur maximale dans un plan axial tangentiel ou sécant avec l'embouchure **48** du canal de recirculation **46** débouchant dans la première section de recirculation **38.** Le décalage axial D11, mesuré dans un plan axial tangentiel à l'embouchure **48** du canal de recirculation **46** débouchant dans la première section de recirculation **38,** est supérieur à 1µm en valeur absolue, et de préférence inférieur à 25µm en valeur absolue. Il est de préférence inférieur au jeu constructif axial **J.**

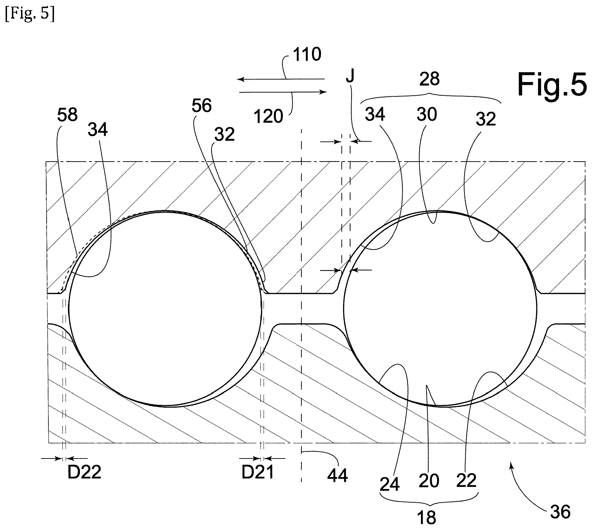

De façon similaire, au niveau de la deuxième section de recirculation **42,** et comme illustré sur la figure 5, le premier flanc **32** du chemin de roulement **28** hélicoïdal de l'écrou **14** est tourné axialement à l'opposé de la section médiane **36,** et présente un décalage axial **D21,** par rapport au premier flanc théorique imaginaire **56,** le premier flanc **32** du chemin de roulement **28** hélicoïdal de l'écrou **14** étant moins éloigné de la section médiane **36** que le premier flanc théorique imaginaire **56.** La deuxième section de recirculation **42** s'étend sur un secteur angulaire supérieur à 10° et inférieur à 360°, de préférence supérieur à 30°, de préférence inférieur à 180°, de préférence inférieur à 90°. De préférence, le décalage axial **D21** augmente continument en valeur absolue, et de préférence avec une dérive continue, depuis une valeur nulle à la deuxième extrémité **44** de la section médiane **36,** jusqu'à une valeur maximale, sur un secteur angulaire autour de l'axe de référence **100.** Le décalage axial **D21** atteint une valeur maximale dans un plan axial tangentiel ou sécant avec l'embouchure **50** du canal de recirculation **46** débouchant dans la deuxième section de recirculation **42.** Le décalage axial **D21,** mesuré dans un plan axial tangentiel à l'embouchure **50** du canal de recirculation **46** débouchant dans la deuxième section de recirculation **42,** est supérieur à 1µm en valeur absolue, et de préférence inférieur à 25µm en valeur absolue. Il est de préférence inférieur au jeu constructif axial J.

Le décalage progressif du premier flanc **32** permet de décharger progressivement les billes **16** circulant dans la première section de recirculation **38** et dans la deuxième section de recirculation **42,** et particulièrement lorsque le mécanisme de vis à billes est chargé de telle sorte qu'au niveau de la section médiane 36, un effort est appliqué par les billes **16** sur le premier flanc **32** de l'écrou **14.**

Au niveau de la première section de recirculation **38,** le deuxième flanc **34** du chemin de roulement **28** hélicoïdal de l'écrou **14** peut le cas échéant présenter un décalage axial **D12** par rapport au deuxième flanc théorique imaginaire **58,** le décalage axial **D12,** mesuré en valeur absolue dans tout plan axial, étant inférieur ou égal à au décalage axial **D11,** le deuxième flanc **34** du chemin de roulement **28** hélicoïdal de l'écrou **14** en étant plus éloigné de la section médiane **36** que le deuxième flanc théorique imaginaire **58.** Dans l'exemple illustré sur la figure 4, le décalage axial **D12** est égal, en valeur absolue, au décalage axial **D11.**

De façon similaire, le deuxième flanc **34** du chemin de roulement **28** hélicoïdal de l'écrou **14** peut présenter un décalage axial **D22** par rapport au deuxième flanc théorique imaginaire **58** au niveau de la deuxième section de recirculation **42,** comme illustré sur la figure 5, le décalage axial **D22,** mesuré en valeur absolue dans tout plan axial, étant inférieur ou égal au décalage axial **D21,** le deuxième flanc **34** du chemin de roulement **28** hélicoïdal de l'écrou **14** en étant plus proche de la section médiane **36** que le deuxième flanc théorique imaginaire **58.**

Le décalage progressif du deuxième flanc **34** permet de décharger progressivement les billes **16** circulant dans la première section de recirculation **38** et dans la deuxième section de recirculation **42,** et particulièrement lorsque le mécanisme de vis à billes est chargé de telle sorte qu'au niveau de la section médiane **36,** un effort est appliqué par les billes **16** sur le deuxième flanc **34** de l'écrou **14.** Le décalage progressif du deuxième flanc **34** est donc utile dans des applications où le mécanisme de vis à billes **10** peut se voir appliquer des efforts de résultante axiale bidirectionnelle.

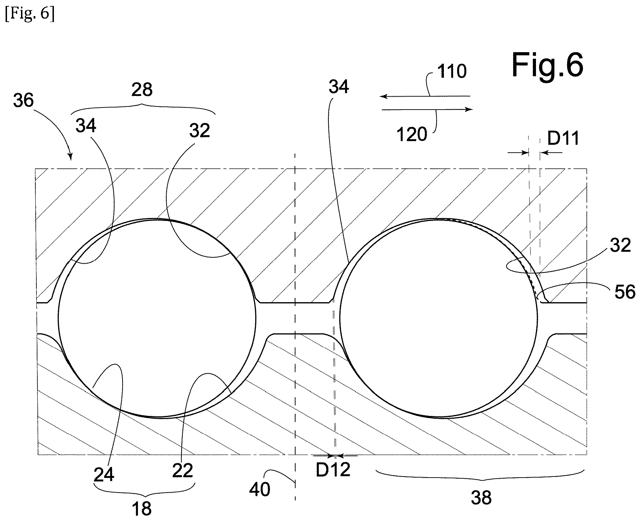

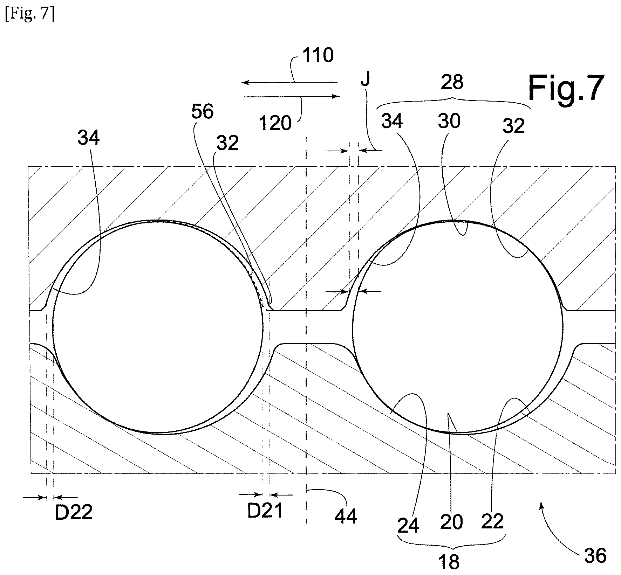

Suivant un deuxième mode de réalisation, et notamment pour des applications dans lesquels les efforts sont unidirectionnels, le deuxième flanc **34** du chemin de roulement **28** hélicoïdal de l'écrou **14** peut être confondu avec le deuxième flanc théorique imaginaire **58** au niveau de la première et/ou de la deuxième section de recirculation **42,** comme illustré sur les figures 6 et 7.

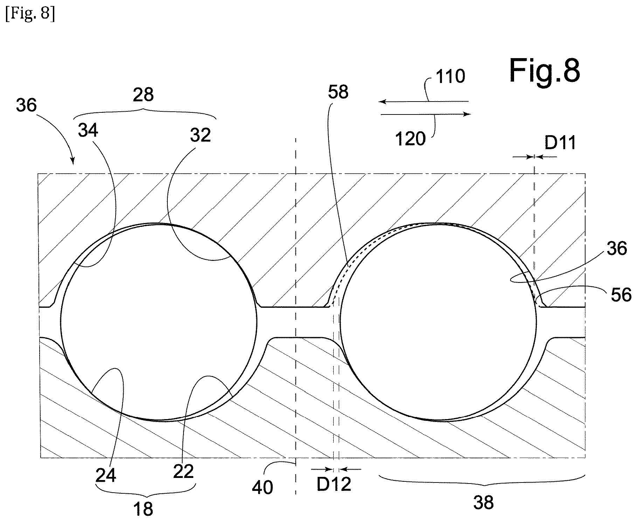

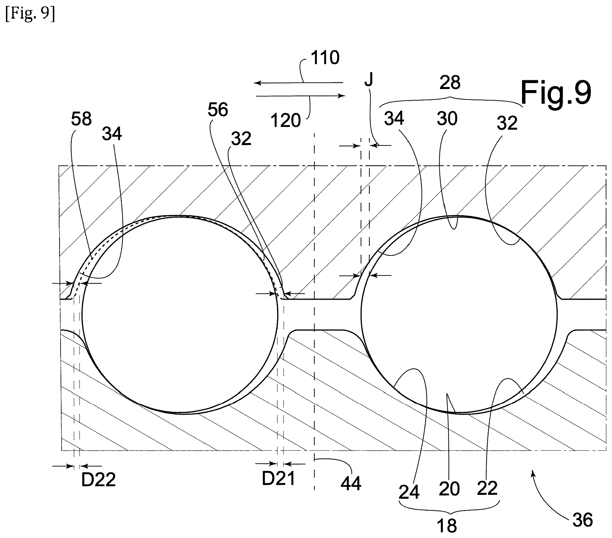

Suivant un autre mode de réalisation, illustré sur les figures 8 et, 9, on prévoit qu'au niveau de la première section de recirculation **38,** le deuxième flanc **34** du chemin de roulement **28** hélicoïdal de l'écrou **14** présente un décalage axial **D12** par rapport au deuxième flanc théorique imaginaire **58,** le décalage axial **D12,** mesuré en valeur absolue dans tout plan axial, étant inférieur ou égal à au décalage axial **D11,** le deuxième flanc **34** du chemin de roulement **28** hélicoïdal de l'écrou **14** étant cette fois plus proche de la section médiane **36** que le deuxième flanc théorique imaginaire **58.** Dans l'exemple illustré sur la figure 4, le décalage axial **D12** est égal, en valeur absolue, au décalage axial **D11.**

De façon similaire, le deuxième flanc **34** du chemin de roulement **28** hélicoïdal de l'écrou **14** peut présenter un décalage axial **D22** par rapport au deuxième flanc théorique imaginaire **58** au niveau de la deuxième section de recirculation **42,** comme illustré sur la figure 5, le décalage axial **D22,** mesuré en valeur absolue dans tout plan axial, étant inférieur ou égal au décalage axial **D21,** le deuxième flanc **34** du chemin de roulement **28** hélicoïdal de l'écrou **14** en étant plus éloigné de la section médiane **36** que le deuxième flanc théorique imaginaire **58.**

Dans une variante de réalisation, il est prévu d'inverser les deux composants filetés, au sens où le chemin de roulement à pas fixe est réalisé sur l'écrou et le chemin de roulement à pas variable et le chemin de recirculation sont réalisés sur la vis.

## Revendications

1. Composant (14) de mécanisme de vis à billes (10), formant un chemin de roulement (28) hélicoïdal autour d'un axe de référence (100) pour guider des billes (16), le chemin de roulement (28) hélicoïdal du composant (14) présentant un fond de chemin, un premier flanc (32) et un deuxième flanc (34) se faisant face de part et d'autre du fond de chemin, le chemin de roulement (28) hélicoïdal du composant (14) comportant au moins une section médiane (36) de une ou plusieurs spires successives formant une hélice de pas constant égal à P, une première section de recirculation (38) à une première extrémité (40) axiale de la section médiane (36), et une deuxième section de recirculation (42) à une deuxième extrémité (44) axiale de la section médiane (36), un premier flanc théorique imaginaire (56) étant défini par une prolongation géométrique imaginaire du premier flanc (32) du chemin de roulement (28) hélicoïdal du composant (14), au pas constant P, depuis la section médiane (36) au-delà de la première extrémité (40) axiale et/ou de la deuxième extrémité (44) axiale, **caractérisé en ce que** :
- au niveau de la première section de recirculation (38), le premier flanc (32) du chemin de roulement (28) hélicoïdal du composant (14) est tourné axialement vers la section médiane (36), et présente un décalage axial D11 par rapport au premier flanc théorique imaginaire (56), le premier flanc (32) du chemin de roulement (28) hélicoïdal du composant (14) étant plus éloigné de la section médiane (36) que le premier flanc théorique imaginaire (56) ; et/ou
- au niveau de la deuxième section de recirculation (42), le premier flanc (32) du chemin de roulement (28) hélicoïdal du composant (14) est tourné axialement à l'opposé de la section médiane (36), et présente un décalage axial D21, par rapport au premier flanc théorique imaginaire (56), le premier flanc (32) du chemin de roulement (28) hélicoïdal du composant (14) étant moins éloigné de la section médiane (36) que le premier flanc théorique imaginaire (56).

2. Composant (14) selon la revendication 1, caractéristique en ce qu'un canal de recirculation (46) relie la première et la deuxième sections de recirculation et débouche par une embouchure dans chacune des première et deuxième sections de recirculation.

3. Composant (14) selon la revendication 2, **caractérisé en ce que** le décalage axial D11, mesuré dans un plan axial tangentiel à l'embouchure du canal de recirculation (46) débouchant dans la première section de recirculation (38), est supérieur à 1µm en valeur absolue et/ou inférieur à 25µm en valeur absolue.

4. Composant (14) selon l'une des revendications précédentes, **caractérisé en ce que** :
- le décalage axial D11 augmente continument en valeur absolue, depuis une valeur nulle à la première extrémité (40) de la section médiane (36), jusqu'à une valeur maximale, sur un secteur angulaire autour de l'axe de référence (100) ; et/ou
- le décalage axial D21 augmente continument en valeur absolue, depuis une valeur nulle à la deuxième extrémité (44) de la section médiane (36), jusqu'à une valeur maximale, sur un secteur angulaire autour de l'axe de référence (100).

5. Composant (14) selon la revendication 4 en combinaison avec la revendication 2 ou la revendication 3, **caractérisé en ce que** :
- la valeur maximale du décalage axial D11 est atteinte dans un plan axial tangentiel ou sécant avec l'embouchure du canal de recirculation (46) débouchant dans la première section de recirculation (38) ; et/ou
- la valeur maximale du décalage axial D21 est atteinte dans un plan axial tangentiel ou sécant avec l'embouchure du canal de recirculation (46) débouchant dans la deuxième section de recirculation (42).

6. Composant (14) selon l'une quelconque des revendications précédentes, **caractérisé en ce que** :
- la première section de recirculation (38) s'étend sur un secteur angulaire supérieur à 10° et inférieur à 360°, de préférence supérieur à 30°, de préférence inférieur à 180°, de préférence inférieur à 90° et/ou
- la deuxième section de recirculation (42) s'étend sur un secteur angulaire supérieur à 10° et inférieur à 360°, de préférence supérieur à 30°, de préférence inférieur à 180°, de préférence inférieur à 90°.

7. Composant (14) selon l'une quelconque des revendications 1 à 6, un deuxième flanc théorique imaginaire (58) étant défini par une prolongation géométrique imaginaire du deuxième flanc (34) du chemin de roulement (28) hélicoïdal du composant (14), au pas constant P, depuis la section médiane (36) au-delà de la première extrémité (40) et de la deuxième extrémité (44) axiales, **caractérisé en ce que** :
- au niveau de la première section de recirculation (38), le deuxième flanc (34) du chemin de roulement (28) hélicoïdal du composant (14) présente un décalage axial D12 par rapport au deuxième flanc théorique imaginaire (58), le décalage axial D12, mesuré en valeur absolue dans tout plan axial, étant inférieur ou égal au décalage axial D11, le deuxième flanc (34) du chemin de roulement (28) hélicoïdal du composant (14) en étant plus éloigné de la section médiane (36) que le deuxième flanc théorique imaginaire (58) ; et/ou
- au niveau de la deuxième section de recirculation (42), le deuxième flanc (34) du chemin de roulement (28) hélicoïdal du composant (14) présente un décalage axial D22 par rapport au deuxième flanc théorique imaginaire (58), le décalage axial D22, mesuré en valeur absolue dans tout plan axial, étant inférieur ou égal au décalage axial D21, le deuxième flanc (34) du chemin de roulement (28) hélicoïdal du composant (14) en étant plus proche de la section médiane (36) que le deuxième flanc théorique imaginaire (58).

8. Composant (14) selon la revendication 7, **caractérisé en ce que**
- le décalage axial D12 est égal, en valeur absolue, au décalage axial D11 ; et/ou
- le décalage axial D22 est égal, en valeur absolue, au décalage axial D21.

9. Composant (14) selon l'une quelconque des revendications 1 à 6, un deuxième flanc théorique imaginaire (58) étant défini par une prolongation géométrique imaginaire du deuxième flanc (34) du chemin de roulement (28) hélicoïdal du composant (14), au pas constant P, depuis la section médiane (36) au-delà de la première et de la deuxième extrémité (40, 44) axiales, **caractérisé en ce que** :
- au niveau de la première section de recirculation (38), le deuxième flanc (34) du chemin de roulement (28) hélicoïdal du composant (14) est confondu avec le deuxième flanc théorique imaginaire (58) ; et/ou
- au niveau de la deuxième section de recirculation (42), le deuxième flanc (34) du chemin de roulement (28) hélicoïdal du composant (14) est confondu avec le deuxième flanc théorique imaginaire (58).

10. Mécanisme de vis à billes (10) comportant :
- deux composants à chemins de roulement hélicoïdaux, à savoir une vis et un écrou, un premier des deux composants étant un composant selon l'une quelconque des revendications précédentes, un deuxième des deux composants présentant un chemin de roulement hélicoïdal (18) autour d'un axe de référence (100) du mécanisme de vis à billes (10), le chemin de roulement hélicoïdal (18) du deuxième composant (12) formant une hélice de pas constant égale à P autour de l'axe de référence (100), et
- des billes (16) positionnées pour circuler en circuit fermé entre le chemin de roulement (28) hélicoïdal du premier composant (14) et le chemin de roulement hélicoïdal (18) du deuxième composant (12) et dans le canal de recirculation (46).

11. Mécanisme de vis à billes (10) selon la revendication 10, dans lequel le chemin de roulement hélicoïdal (18) du deuxième composant (12) présente un fond de chemin, un premier flanc (22) et un deuxième flanc (24) se faisant face de part et d'autre du fond de chemin, le premier flanc (22) du chemin de roulement hélicoïdal (18) du deuxième composant (12) étant tourné dans un même premier sens axial (110) que le premier flanc (32) du chemin de roulement (28) hélicoïdal du premier composant (14), le deuxième flanc (24) du chemin de roulement hélicoïdal (18) du deuxième composant (12) étant tourné dans un même deuxième sens axial (120) que le deuxième flanc (34) du chemin de roulement (28) hélicoïdal du premier composant (14), **caractérisé en ce qu'**au niveau de la section médiane (36), lorsque les billes (16) sont simultanément en contact avec le premier flanc (22) et le deuxième flanc (24) du chemin de roulement hélicoïdal (18) du deuxième composant (12) et avec le premier flanc (32) du chemin de roulement (28) du premier composant (14), il existe un jeux constructif axial J entre les billes (16) et le deuxième flanc (34) du chemin de roulement (28) hélicoïdal du premier composant (14).

12. Mécanisme de vis à billes (10) selon la revendication 11, **caractérisé en ce que**
- le décalage D11 est inférieur au jeux constructif axial J ; et/ou
- le décalage D21 est inférieur au jeux constructif axial J ; et/ou
- le jeux constructif axial J, mesuré parallèlement à la direction axiale, est supérieur à 1µm ; et/ou
- le jeux constructif axial J, mesuré parallèlement à la direction axiale, est inférieur à 25µm.

## Patentansprüche

1. Komponente (14) eines Kugelumlaufspindelmechanismus (10), die eine spiralförmige Laufbahn (28) um eine Referenzachse (100) zur Führung von Kugeln (16) bildet, wobei die spiralförmige Laufbahn (28) der Komponente (14) einen Laufbahnboden, eine erste Flanke (32) und eine zweite Flanke (34) aufweist, die einander auf beiden Seiten des Laufbahnbodens zugewandt sind, wobei die spiralförmige Laufbahn (28) der Komponente (14) mindestens einen Mittelabschnitt (36) mit einer oder mehreren aufeinanderfolgenden Windungen, die eine Helix mit konstanter Steigung gleich P bilden, einen ersten Rezirkulationsabschnitt (38) an einem ersten axialen Ende (40) des Mittelabschnitts (36) und einen zweiten Rezirkulationsabschnitt (42) an einem zweiten axialen Ende (44) des Mittelabschnitts (36) umfasst, wobei eine erste imaginäre theoretische Flanke (56) durch eine imaginäre geometrische Verlängerung der ersten Flanke (32) der spiralförmigen Laufbahn (28) der Komponente (14) mit konstanter Steigung P, von dem Mittelabschnitt (36) über das erste axiale Ende (40) und/oder das zweite axiale Ende (44) hinaus definiert ist, **dadurch gekennzeichnet, dass:**
- im Bereich des ersten Rezirkulationsabschnitts (38) die erste Flanke (32) der spiralförmigen Laufbahn (28) der Komponente (14) axial zum Mittelabschnitt (36) gedreht ist und einen axialen Versatz D11 in Bezug auf die erste imaginäre theoretische Flanke (56) aufweist, wobei die erste Flanke (32) der spiralförmigen Laufbahn (28) der Komponente (14) weiter vom Mittelabschnitt (36) entfernt ist als die erste imaginäre theoretische Flanke (56); und/oder
- im Bereich des zweiten Rezirkulationsabschnitts (42) die erste Flanke (32) der spiralförmigen Laufbahn (28) der Komponente (14) axial entgegen dem Mittelabschnitt (36) gedreht ist und einen axialen Versatz D21 in Bezug auf die erste imaginäre theoretische Flanke (56) aufweist, wobei die erste Flanke (32) der spiralförmigen Laufbahn (28) der Komponente (14) weniger weit vom Mittelabschnitt (36) entfernt ist als die erste imaginäre theoretische Flanke (56).

2. Komponente (14) nach Anspruch 1, **dadurch gekennzeichnet, dass** ein Rezirkulationskanal (46) den ersten und den zweiten Rezirkulationsabschnitt verbindet und über eine Mündung in jeden des ersten und des zweiten Rezirkulationsabschnitts mündet.

3. Komponente (14) nach Anspruch 2, **dadurch gekennzeichnet, dass** der axiale Versatz D11, gemessen in einer axialen Ebene tangential zur Mündung des in den ersten Rezirkulationsabschnitt (38) mündenden Rezirkulationskanals (46), im absoluten Wert größer als 1 µm und/oder im absoluten Wert kleiner als 25 µm ist.

4. Komponente (14) nach einem der vorstehenden Ansprüche,
**dadurch gekennzeichnet, dass:**
- der axiale Versatz D11 im absoluten Wert kontinuierlich von einem Wert Null am ersten Ende (40) des Mittelabschnitts (36) bis zu einem Maximalwert in einem Winkelbereich um die Referenzachse (100) zunimmt; und/oder
- der axiale Versatz D21 im absoluten Wert kontinuierlich von einem Wert Null am zweiten Ende (44) des Mittelabschnitts (36) bis zu einem Maximalwert in einem Winkelbereich um die Referenzachse (100) zunimmt.

5. Komponente (14) nach Anspruch 4 in Kombination mit Anspruch 2 oder Anspruch 3, **dadurch gekennzeichnet, dass**:
- der Maximalwert des axialen Versatzes D11 in einer axialen Ebene tangential oder sekant zur Mündung des in den ersten Rezirkulationsabschnitt (38) mündenden Rezirkulationskanals (46) erreicht ist; und/oder
- der Maximalwert des axialen Versatzes D21 in einer axialen Ebene tangential oder sekant zur Mündung des in den zweiten Rezirkulationsabschnitt (42) mündenden Rezirkulationskanals (46) erreicht ist.

6. Komponente (14) nach einem der vorstehenden Ansprüche,
**dadurch gekennzeichnet, dass:**
- der erste Rezirkulationsabschnitt (38) sich über einen Winkelbereich von mehr als 10° und weniger als 360°, vorzugsweise mehr als 30°, vorzugsweise weniger als 180°, vorzugsweise weniger als 90° erstreckt und/oder
- der zweite Rezirkulationsabschnitt (42) sich über einen Winkelbereich von mehr als 10° und weniger als 360°, vorzugsweise mehr als 30°, vorzugsweise weniger als 180°, vorzugsweise weniger als 90° erstreckt.

7. Komponente (14) nach einem der Ansprüche 1 bis 6, wobei eine zweite imaginäre theoretische Flanke (58) durch eine imaginäre geometrische Verlängerung der zweiten Flanke (34) der spiralförmigen Laufbahn (28) der Komponente (14) mit konstanter Steigung P, vom Mittelabschnitt (36) über das erste axiale Ende (40) und das zweite axiale Ende (44) hinaus definiert ist, **dadurch gekennzeichnet, dass:**
- im Bereich des ersten Rezirkulationsabschnitts (38) die zweite Flanke (34) der spiralförmigen Laufbahn (28) der Komponente (14) einen axialen Versatz D12 in Bezug auf die zweite imaginäre theoretische Flanke (58) aufweist, wobei der axiale Versatz D12, gemessen im absoluten Wert in jeder axialen Ebene, kleiner oder gleich dem axialen Versatz D11 ist, wobei die zweite Flanke (34) der spiralförmigen Laufbahn (28) der Komponente (14) weiter vom Mittelabschnitt (36) entfernt ist als die zweite imaginäre theoretische Flanke (58); und/oder
- im Bereich des zweiten Rezirkulationsabschnitts (42) die zweite Flanke (34) der spiralförmigen Laufbahn (28) der Komponente (14) einen axialen Versatz D22 in Bezug auf die zweite imaginäre theoretische Flanke (58) aufweist, wobei der axiale Versatz D22, gemessen im absoluten Wert in jeder axialen Ebene, kleiner oder gleich dem axialen Versatz D21 ist, wobei die zweite Flanke (34) der spiralförmigen Laufbahn (28) der Komponente (14) näher am Mittelabschnitt (36) liegt als die zweite imaginäre theoretische Flanke (58).

8. Komponente (14) nach Anspruch 7, **dadurch gekennzeichnet, dass**
- der axiale Versatz D12 im absoluten Wert gleich dem axialen Versatz D11 ist; und/oder
- der axiale Versatz D22 im absoluten Wert gleich dem axialen Versatz D21 ist.

9. Komponente (14) nach einem der Ansprüche 1 bis 6, wobei eine zweite imaginäre theoretische Flanke (58) durch eine imaginäre geometrische Verlängerung der zweiten Flanke (34) der spiralförmigen Laufbahn (28) der Komponente (14) mit konstanter Steigung P, vom Mittelabschnitt (36) über das erste und zweite axiale Ende (40, 44) hinaus definiert ist, **dadurch gekennzeichnet, dass:**
- im Bereich des ersten Rezirkulationsabschnitts (38) die zweite Flanke (34) der spiralförmigen Laufbahn (28) der Komponente (14) mit der zweiten imaginären theoretischen Flanke (58) zusammenfällt; und/oder
- im Bereich des zweiten Rezirkulationsabschnitts (42) die zweite Flanke (34) der spiralförmigen Laufbahn (28) der Komponente (14) mit der zweiten imaginären theoretischen Flanke (58) zusammenfällt.

10. Kugelumlaufspindelmechanismus (10), umfassend:
- zwei Komponenten mit spiralförmigen Laufbahnen, nämlich eine Schraube und eine Mutter, wobei eine erste der zwei Komponenten eine Komponente nach einem der vorstehenden Ansprüche ist, eine zweite der zwei Komponenten eine spiralförmige Laufbahn (18) um eine Referenzachse (100) des Kugelumlaufspindelmechanimus (10) aufweist, wobei die spiralförmige Laufbahn (18) der zweiten Komponente (12) eine Helix mit konstanter Steigung gleich P um die Referenzachse (100) bildet, und
- Kugeln (16), die positioniert sind, um in einem geschlossenen Kreislauf zwischen der spiralförmigen Laufbahn (28) der ersten Komponente (14) und der spiralförmigen Laufbahn (18) der zweiten Komponente (12) und im Rezirkulationskanal (46) zu zirkulieren.

11. Kugelumlaufspindelmechanismus (10) nach Anspruch 10, wobei die spiralförmige Laufbahn (18) der zweiten Komponente (12) einen Laufbahnboden, eine erste Flanke (22) und eine zweite Flanke (24) aufweist, die einander auf beiden Seiten des Laufbahnbodens zugewandt sind, wobei die erste Flanke (22) der spiralförmigen Laufbahn (18) der zweiten Komponente (12) in derselben ersten axialen Richtung (110) wie die erste Flanke (32) der spiralförmigen Laufbahn (28) der ersten Komponente (14) gedreht ist, wobei die zweite Flanke (24) der spiralförmigen Laufbahn (18) der zweiten Komponente (12) in derselben zweiten axialen Richtung (120) wie die zweite Flanke (34) der spiralförmigen Laufbahn (28) der ersten Komponente (14) gedreht ist, **dadurch gekennzeichnet, dass** im Bereich des Mittelabschnitts (36), wenn die Kugeln (16) gleichzeitig mit der ersten Flanke (22) und der zweiten Flanke (24) der spiralförmigen Laufbahn (18) der zweiten Komponente (12) und mit der ersten Flanke (32) der Laufbahn (28) der ersten Komponente (14) in Kontakt stehen, ein axialer Konstruktionsspielraum J zwischen den Kugeln (16) und der zweiten Flanke (34) der spiralförmigen Laufbahn (28) der ersten Komponente (14) vorhanden ist.

12. Kugelumlaufspindelmechanismus (10) nach Anspruch 11,
**dadurch gekennzeichnet, dass**
- der Versatz D11 kleiner ist als der axiale Konstruktionsspielraum J; und/oder
- der Versatz D21 kleiner ist als der axiale Konstruktionsspielraum J; und/oder
- der axiale Konstruktionsspielraum J, gemessen parallel zur axialen Richtung, größer als 1 µm ist; und/oder
- der axiale Konstruktionsspielraum J, gemessen parallel zur axialen Richtung, kleiner als 25 µm ist.

## Claims

1. Component (14) of a ball screw mechanism (10), forming a helical raceway (28) about a reference axis (100) for guiding balls (16), the helical raceway (28) of the component (14) having a raceway base, a first flank (32) and a second flank (34) facing each other on either side of the raceway base, the helical raceway (28) of the component (14) comprising at least one middle section (36) of one or more successive turns forming a helix of constant pitch equal to P, a first recirculation section (38) at a first axial end (40) of the middle section (36), and a second recirculation section (42) at a second axial end (44) of the middle section (36), a first imaginary theoretical flank (56) being defined by an imaginary geometric extension of the first flank (32) of the helical raceway (28) of the component (14), at constant pitch P, from the middle section (36) beyond the first axial end (40) and/or the second axial end (44), **characterized in that:**
- at the first recirculation section (38), the first flank (32) of the helical raceway (28) of the component (14) is turned axially toward the middle section (36), and has an axial offset D11 with respect to the first imaginary theoretical flank (56), the first flank (32) of the helical raceway (28) of the component (14) being further away from the middle section (36) than the first imaginary theoretical flank (56); and/or
- at the second recirculation section (42), the first flank (32) of the helical raceway (28) of the component (14) is turned axially away from the middle section (36), and has an axial offset D21 with respect to the first imaginary theoretical flank (56), the first flank (32) of the helical raceway (28) of the component (14) being closer to the middle section (36) than the first imaginary theoretical flank (56).

2. Component (14) according to claim 1, **characterized in that** a recirculation channel (46) connects the first and second recirculation sections and opens via a mouth into each of the first and second recirculation sections.

3. Component (14) according to claim 2, **characterized in that** the axial offset D11, measured in an axial plane tangential to the mouth of the recirculation channel (46) opening into the first recirculation section (38), is greater than 1 µm in absolute value and/or less than 25 µm in absolute value.

4. Component (14) according to any of the preceding claims,
**characterized in that:**
- the axial offset D11 increases continuously in absolute value, from a zero value at the first end (40) of the middle section (36), to a maximum value, over an angular sector about the reference axis (100); and/or
- the axial offset D21 increases continuously in absolute value, from a zero value at the second end (44) of the middle section (36), to a maximum value, over an angular sector about the reference axis (100).

5. Component (14) according to claim 4 in combination with claim 2 or claim 3, **characterized in that:**
- the maximum value of the axial offset D11 is reached in an axial plane tangential or secant to the mouth of the recirculation channel (46) opening into the first recirculation section (38); and/or
- the maximum value of the axial offset D21 is reached in an axial plane tangential or secant to the mouth of the recirculation channel (46) opening into the second recirculation section (42).

6. Component (14) according to any of the preceding claims,
**characterized in that:**
- the first recirculation section (38) extends over an angular sector greater than 10 ° and less than 360 °, preferably greater than 30 °, preferably less than 180 °, preferably less than 90 ° and/or
- the second recirculation section (42) extends over an angular sector greater than 10 ° and less than 360 °, preferably greater than 30 °, preferably less than 180 °, preferably less than 90 °.

7. Component (14) according to any of claims 1 to 6, a second imaginary theoretical flank (58) being defined by an imaginary geometrical extension of the second flank (34) of the helical raceway (28) of the component (14), at constant pitch P, from the middle section (36) beyond the first axial end (40) and the second axial end (44), **characterized in that:**
- at the first recirculation section (38), the second flank (34) of the helical raceway (28) of the component (14) has an axial offset D12 with respect to the second imaginary theoretical flank (58), the axial offset D12, measured in absolute value in any axial plane, being less than or equal to the axial offset D11, the second flank (34) of the helical raceway (28) of the component (14) being further away from the middle section (36) than the second imaginary theoretical flank (58); and/or
- at the second recirculation section (42), the second flank (34) of the helical raceway (28) of the component (14) has an axial offset D22 with respect to the second imaginary theoretical flank (58), the axial offset D22, measured in absolute value in any axial plane, being less than or equal to the axial offset D21, the second flank (34) of the helical raceway (28) of the component (14) being closer to the middle section (36) than the second imaginary theoretical flank (58).

8. Component (14) according to claim 7, **characterized in that**
- the axial offset D12 is equal in absolute value to the axial offset D11; and/or
- the axial offset D22 is equal in absolute value to the axial offset D21.

9. Component (14) according to any of claims 1 to 6, a second imaginary theoretical flank (58) being defined by an imaginary geometrical extension of the second flank (34) of the helical raceway (28) of the component (14), at constant pitch P, from the middle section (36) beyond the first and second axial ends (40, 44), **characterized in that:**
- at the first recirculation section (38), the second flank (34) of the helical raceway (28) of the component (14) is coincident with the second imaginary theoretical flank (58); and/or
- at the second recirculation section (42), the second flank (34) of the helical raceway (28) of the component (14) is coincident with the second imaginary theoretical flank (58).

10. Ball screw mechanism (10) comprising:
- two components having helical raceways, namely a screw and a nut, a first of the two components being a component according to any of the preceding claims, a second of the two components having a helical raceway (18) about a reference axis (100) of the ball screw mechanism (10), the helical raceway (18) of the second component (12) forming a helix of constant pitch equal to P about the reference axis (100), and
- balls (16) positioned to circulate in a closed circuit between the helical raceway (28) of the first component (14) and the helical raceway (18) of the second component (12) and in the recirculation channel (46).

11. Ball screw mechanism (10) according to claim 10, wherein the helical raceway (18) of the second component (12) has a raceway base, a first flank (22) and a second flank (24) facing each other on either side of the raceway base, the first flank (22) of the helical raceway (18) of the second component (12) being turned in the same first axial direction (110) as the first flank (32) of the helical raceway (28) of the first component (14), the second flank (24) of the helical raceway (18) of the second component (12) being turned in the same second axial direction (120) as the second flank (34) of the helical raceway (28) of the first component (14), **characterized in that,** in the middle section (36), when the balls (16) are simultaneously in contact with the first flank (22) and the second flank (24) of the helical raceway (18) of the second component (12) and with the first flank (32) of the raceway (28) of the first component (14), there is an axial structural clearance J between the balls (16) and the second flank (34) of the helical raceway (28) of the first component (14).

12. Ball screw mechanism (10) according to claim 11, **characterized in that**
- the offset D11 is less than the axial structural clearance J; and/or
- the offset D21 is less than the axial structural clearance J; and/or
- the axial structural clearance J, measured parallel to the axial direction, is greater than 1 µm; and/or
- the axial structural clearance J, measured parallel to the axial direction, is less than 25 µm.
